# EUROPEAN PATENT APPLICATION

(11) **EP 4 787 863 A1**
(43) Date of publication of application: **05.08.2026**
(21) Application number: 24873142.4
(22) Date of filing: 24.09.2024
(51) Int. Cl.: H04N 21/239, H04N 21/218, H04N 21/478

(54) **REQUEST DISPLAY METHOD AND APPARATUS, ELECTRONIC DEVICE, STORAGE MEDIUM, AND PROGRAM PRODUCT**

(30) Priority: 28.09.2023 CN 202311288362
(71) Applicant: Lemon Inc., Grand Cayman, KY1-1205 (KY)
(72) Inventor: POH, Chee Kian, Daniel, PO Box 636 910916 (SG) (CN)
(74) Representative: Grünecker Patent- und Rechtsanwälte PartG mbB
(86) International application number: PCT/SG2024/050619
(87) International publication number: WO 2025/071485

(57) **Abstract**

Embodiments of the disclosure provide a method, apparatus, electronic device, storage medium and program product for displaying a request. The method includes: receiving a request display operation of a current user in a live streaming page; displaying, in response to the request display operation, a request list in the live streaming page, and displaying, based on virtual resource information corresponding to a plurality of interaction requests in a live stream, request information of the plurality of interaction requests within the request list, the live stream corresponding to the live streaming page. According to the embodiments of the disclosure with the above technical solution, the display mode of the interaction request in the request list can be enriched.

## Description

### CROSS-REFERENCE

The present application claims priority to Chinese Patent Application No. 202311288362.0, filed Sep. 28, 2023, entitled "METHOD, APPARATUS, ELECTRONIC DEVICE, STORAGE MEDIUM AND PROGRAM PRODUCT FOR DISPLAYING REQUEST", the entirety of which is incorporated herein by reference.

### FIELD

Embodiments of the present disclosure relate to a technical field of computers, and in particular, to a method, apparatus, electronic device, storage medium and program product for displaying a request.

### BACKGROUND

With the rapid development of technology, more and more users are performing live streaming through live streaming software.

In order to increase interactivity between a streamer and a viewer, when the streamer performs live streaming, the viewer may send a connection request to the streamer, and correspondingly, the streamer may select the viewer from a request list for connection. However, currently, the display mode of the connection request in the request list is relatively monotonous.

### SUMMARY

The embodiments of the present disclosure provide a method, apparatus, electronic device, storage medium and program product for displaying a request, to enrich the display mode of the connection request in the request list.

According to a first aspect, an embodiment of the present disclosure provides a method for displaying a request, including: receiving a request display operation of a current user in a live streaming page; in response to the request display operation, displaying a request list in the live streaming page, and displaying, in response to the request display operation, a request list in the live streaming page, and displaying, based on virtual resource information corresponding to a plurality of interaction requests in a live stream, request information of the plurality of interaction requests within the request list, the live stream corresponding to the live streaming page.

According to a second aspect, an embodiment of the present disclosure further provides an apparatus for displaying a request, including: an operation receiving module configured to receive a request display operation of a current user in a live streaming page; and a list display module configured to display, in response to the request display operation, a request list in the live streaming page, and display, based on virtual resource information corresponding to a plurality of interaction requests in a live stream, request information of the plurality of interaction requests within the request list, the live stream corresponding to the live streaming page.

According to a third aspect, an embodiment of the present disclosure further provides an electronic device, including: one or more processors; and a memory, configured to store one or more programs, where the one or more programs, when executed by the one or more processors, cause the one or more processors to implement the method for displaying a request according to the embodiments of the present disclosure.

According to a fourth aspect, an embodiment of the present disclosure further provides a computer-readable storage medium having a computer program stored thereon, where the program, when executed by a processor, implements the method for displaying a request according to the embodiments of the present disclosure.

According to a fifth aspect, an embodiment of the present disclosure further provides a computer program product, where the computer program product, when executed by a computer, causes the computer to implement the method for displaying a request according to the embodiments of the present disclosure.

### BRIEF DESCRIPTION OF DRAWINGS

The above and other features, advantages, and aspects of various embodiments of the present disclosure will become more apparent from the following detailed description taken in conjunction with the accompanying drawings. Throughout the drawings, the same or similar reference numbers refer to the same or similar elements. It should be understood that the drawings are schematic, and components and elements are not necessarily drawn to scale.
FIG. 1 is a schematic flowchart of a method for displaying a request according to an embodiment of the present disclosure;
FIG. 2 is a schematic diagram of displaying a request list according to an embodiment of the present disclosure;
FIG. 3 is a schematic diagram of another request list according to an embodiment of the present disclosure;
FIG. 4 is a schematic diagram of displaying a setting panel according to an embodiment of the present disclosure;
FIG. 5 is a schematic flowchart of another method for displaying a request according to an embodiment of the present disclosure;
FIG. 6 is a schematic diagram of switching state information from an expanded state to a retracted state according to an embodiment of the present disclosure;
FIG. 7 is a structural block diagram of an apparatus for displaying a request according to an embodiment of the present disclosure;
FIG. 8 is a schematic structural diagram of an electronic device according to an embodiment of the present disclosure.

### DETAILED DESCRIPTION

Embodiments of the present disclosure will be described in more detail below with reference to the accompanying drawings. Although some embodiments of the present disclosure are shown in the accompanying drawings, it should be understood that the present disclosure may be implemented in various forms, and should not be interpreted as limited to embodiments set forth herein, on the contrary, these embodiments are provided for a more thorough and complete understanding of the present disclosure. It should be understood that the drawings and embodiments of the present disclosure are merely for example purposes and are not intended to limit the scope of the present disclosure.

It should be understood that steps recited in method embodiments of the present disclosure may be performed in different orders, and/or performed in parallel. Further, the method embodiments may include additional steps and/or omit performing the illustrated steps. The scope of the present disclosure is not limited in this respect.

As used herein, the term "comprising" and its variations are open, i.e., "comprising but not limited to". The term "based on" is "based at least in part on". The term "one embodiment" means "at least one embodiment"; the term "a further embodiment" means "at least one further embodiment"; the term "some embodiments" means "at least some embodiments". The relevant definitions of other terms will be given below.

It should be noted that the concepts such as "first" and "second" mentioned in this disclosure are merely configured to distinguish different apparatuses, modules, or units, and are not intended to limit the order of functions performed by the apparatuses, modules, or units or mutual dependency relationships of the apparatuses, modules, or units.

It should be noted that the modifiers "a" and "a plurality of" mentioned in this disclosure is illustrative rather than limiting, and those skilled in the art should understand that the modifiers should be understood as "one or more" unless otherwise explicitly indicated in the context.

Names of messages or information interacted between a plurality of apparatuses in the embodiments of the present disclosure are for illustrative purposes only and are not intended to limit the scope of such messages or information.

It can be understood that, before technical solutions disclosed in the embodiments of the present disclosure are used, types, usage scopes, usage scenarios and the like of personal information related to the present disclosure should be informed to the user and obtain user authorization in an appropriate manner according to relevant laws and regulations.

For example, in response to receiving an active request from a user, prompt information is sent to the user to explicitly prompt the user that the operation requested to perform will need to acquire and use the personal information of the user. Therefore, the user can autonomously select whether to provide personal information to software or hardware such as electronic devices, application programs, servers and storage media which execute the operation of the technical solution of the present disclosure according to the prompt information.

As an optional but non-limiting implementation, in response to receiving the active request of the user, a manner of sending the prompt information to the user may be, for example, a pop-up window, and prompt information may be presented in a text manner in the pop-up window. In addition, the pop-up window may further carry a selection control for the user to select "agree" or "not agree" to provide personal information to the electronic device.

It may be understood that the foregoing notification and obtaining a user authorization process are merely illustrative, and do not constitute a limitation on implementations of the present disclosure, and other manners which meet related laws and regulations may also be applied to implementations of the present disclosure.

It may be understood that the data involved in this technical solution (including but not limited to the data itself, obtaining of the data or usage of the data) should follow the corresponding laws and regulations and requirements of related regulations.

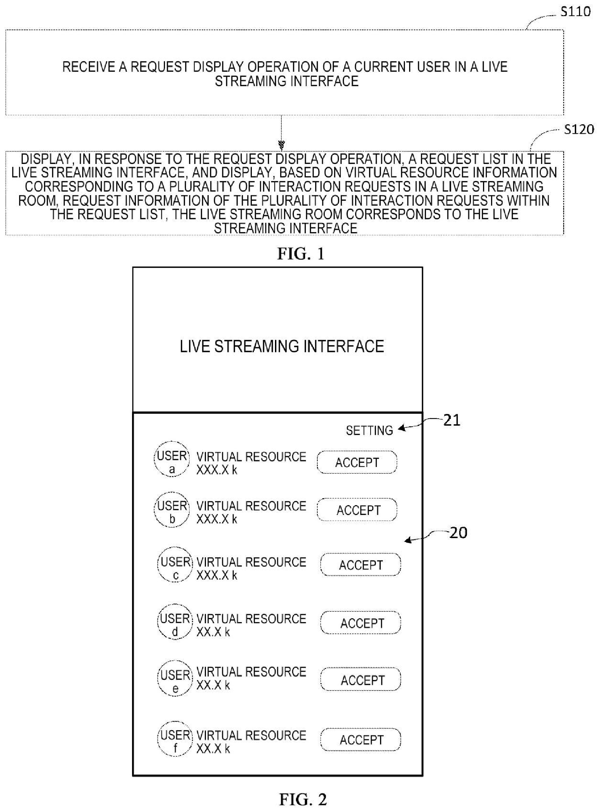

FIG. 1 is a schematic flowchart of a method for displaying a request according to an embodiment of the present disclosure. The method may be performed by an apparatus for displaying a request, where the apparatus may be implemented by software and/or hardware, the apparatus may be configured in an electronic device, and typically, the apparatus may be configured in a mobile phone or a tablet computer. The method for displaying a request provided in the embodiments of the present disclosure is applicable to a scenario in which a request list of a live stream is displayed in a live streaming page, for example, a scenario in which a request list of connection requests in a live stream is displayed in a live streaming page. As shown in FIG. 1, the method for displaying a request provided by this embodiment may include: S110, receive a request display operation of a current user in a live streaming page.

In some embodiments, the current user may refer to a user that currently performs the request display operation in the live streaming page, and may be any user in the live stream corresponding to the live streaming page, such as a streamer or a viewer of the live stream. The request display operation may be considered as an operation to indicate displaying a request list, a specific execution mode of the request display operation is not limited, for example, the request display operation may be an operation of triggering to click on a certain control, or an operation of performing a predetermined gesture on the live streaming page, and the predetermined gesture may be a gesture determined in advanced, for example, the predetermined gesture may be a gesture for drawing circles. For example, when the current user is not a streamer of the live stream, the request display operation may include a request sending operation. The request sending operation may be a triggering operation configured to indicate sending the interaction request to the streamer.

In this step, after the current user performs the request display operation in the live streaming page, a current application program may receive the request display operation to respond to the request display operation, and perform subsequent display steps.

S120: display, in response to the request display operation, a request list in the live streaming page, and display, based on virtual resource information corresponding to a plurality of interaction requests in a live stream, request information of the plurality of interaction requests within the request list. The live stream corresponds to the live streaming page.

In some embodiments, the request list may be understood as a list of interaction requests in the live stream. The request list may be configured to display the request information of the interaction request in the live stream.

The interaction request may be an interaction request received by the streamer, for example, an interaction request received by the streamer and has not been processed yet, that is, the request list may be a list of interaction requests that have not been processed yet, for example, the interaction request that has been processed may be moved out of the request list. The specific content of the interaction request is not limited, for example, the interaction request may be a connection request, a game request, a co-creation request, an explanation request, and/or a singing request, and the like, which may be preconfigured by a related person. The following takes the interaction request to be a connection request as an example for description. The interaction request may be sent to the streamer by a user other than the streamer in the live stream according to needs.

The request information may be information of an interaction request, for example, the request information of an interaction request may include sending user information of the interaction request, for example, identification information of a sending user of the interaction request, and the identification information may include, for example, an avatar and/or a nickname of the sending user. In some embodiments, the request information of the interaction request may include virtual resource information of the sending user, that is, information of virtual resource sent by the sending user in the current live stream. The virtual resource information included in different request information may be displayed with the same or different display precision. The virtual resource may be a resource that is virtual, for example, a resource used to obtain a virtual item. For example, the virtual resource may be used to exchange virtual good, a virtual resource value may be a value of a virtual resource, for example, a number of virtual resources, and the virtual resource value may be configured to represent the number of virtual resources.

Alternatively, the virtual resource information is information of a virtual resource sent by a sending user of the interaction request in the live stream, the request information includes a virtual resource value in the virtual resource information, and the virtual resource values displayed within the request list have the same or different display precision. A sending user of an interaction request may refer to a user sending the interaction request, that is, a sending party of the interaction request. The virtual resource information corresponding to an interaction request may be information of a virtual resource sent by a sending user of the interaction request in a live stream, and the virtual resource information may include a virtual resource value. The virtual resource information corresponding to different interaction requests may be displayed within the request list using the same or different display precision, that is, the virtual resource values corresponding to different interaction requests may be displayed within the request list using the same or different precisions.

Specifically, after receiving the request display operation of the current user in the live streaming page, the request list may be displayed in the live streaming page in response to the request display operation, and the request information of the plurality of interaction requests is displayed within the request list based on the virtual resource information corresponding to each of the plurality of interaction requests in the live stream.

In this embodiment, the interaction request in the live stream may be displayed within the request list based on the virtual resource information corresponding to the interaction request, so that the display mode of the interaction request in the request list can be enriched, the display flexibility of the interaction request is improved, and the efficiency of the streamer processing the interaction request can be improved and the efficiency of viewer viewing the interaction request can be improved.

In this embodiment, the manner of displaying the request information of the interaction request based on the virtual resource information corresponding to the interaction request may be flexibly set, for example, the request information of the interaction request meeting a set condition may be displayed within one area of the request list based on whether the virtual resource information meets the set condition, and the request information of the interaction request not meeting the set condition is displayed within another area of the request list. Alternatively, when there is a plurality of set conditions, the request information of different interaction requests meeting different set conditions is displayed within different areas of the request list based on the set conditions met by the virtual resource information, and so on.

In some implementations, the virtual resource information includes a virtual resource value, and the displaying, based on the virtual resource information corresponding to the plurality of interaction requests in the live stream, the request information of the plurality of interaction requests within the request list includes: displaying the request information of the plurality of interaction requests in the live stream within the request list in a target sorting manner, wherein the request information of the plurality of interaction requests is sorted in the target sorting manner based on a size relationship of virtual resource values corresponding to the plurality of interaction requests.

In some embodiments, the target sorting manner may be a sorting manner of sorting the interaction requests based on the size relationship of the corresponding virtual resource values. For example, the request information of the interaction request in the live stream may be displayed within the request list in descending order or ascending order of the corresponding virtual resource values. The following uses an example in which the request information of the interaction request in the live stream is displayed within the request list in descending order of the corresponding virtual resource values. The virtual resource value corresponding to an interaction request may be a value of the virtual resource sent by the sending user of the interaction request in the live stream.

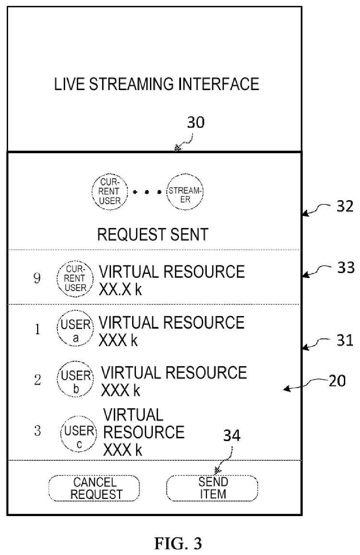

Specifically, after receiving the request display operation of the current user in the live streaming page, a request list 20 may be displayed in the live streaming page in response to the request display operation, and the request information of the interaction request in the live stream is displayed in the request list 20 based on the size relationship of the virtual resource values of the virtual resources sent by the user sending the interaction request in the live stream corresponding to the live streaming page. For example, the request information of the interaction request in the live stream may be displayed in the request list 20 based on the descending order of the virtual resource values of the virtual resources sent by the user sending the interaction request in the live stream, as shown in FIG. 2 and FIG. 3.

In this embodiment, the interaction request in the live stream may be displayed within the request list based on the size relationship of the virtual resource values of the virtual resources sent by the user sending the interaction request in the live stream in the live stream, so that the streamer can quickly determine quantity relationships of the virtual resources that have been sent in the live stream by the user sending the interaction request, and process the interaction request sent by the user in the live stream based on the quantity relationships, for example, selecting the interaction request for processing based on the quantity relationships, and the efficiency of the streamer in processing the interaction request can be improved. In addition, a user other than the streamer is supported to view the request list of the live stream, so that the user sending the interaction request may determine other users sending the interaction request in the live stream and the quantity relationship of virtual resources between the user themselves and the other users who have sent the interaction request, and improve the efficiency of viewing the interaction request by the viewer.

In this embodiment, the request information may include a virtual resource value of the sending user. The virtual resource value may have the same or different display precision on the streamer side and the viewer side, and the display precision may be specifically set as required.

In some implementations, displaying, based on the virtual resource information corresponding to the plurality of interaction requests in the live stream, the request information of the plurality of interaction requests within the request list includes at least one of: in accordance with a determination that the current user is a streamer of the live stream, displaying a virtual resource value in the request information within the request list by using a first display precision. In accordance with a determination that the current user is not the streamer of the live stream, the virtual resource value in at least part of the request information is displayed by using the first display precision, and the virtual resource value in the request information within the request list other than the at least part of the request information is displayed by using the second display precision. The first display precision is higher than the second display precision.

In some embodiments, the first display precision and the second display precision may be different display precisions, and the first display precision may be higher than the second display precision. For example, when the virtual resource value is displayed, in the first display precision, the virtual resource value may be precise to units, tens, or hundreds place; in the second display precision, the virtual resource value may be precise to thousands or ten-thousands place.

For example, when the streamer performs the request display operation in the live streaming page at the streamer end, for example, when it is detected that the streamer performs the request display operation, the request list 20 may be displayed in the live streaming page in response to the request display operation. The request information of the interaction request in the live stream is displayed in the request list 20 based on the virtual resource information corresponding to the interaction request, and when the request information of the interaction request in the live stream is displayed, the virtual resource value of the virtual resource sent by the sending user included in the request information is displayed by using the first display precision, as shown in FIG. 2 (an example in which the first display precision is precise to hundreds place in the figure, and a specific value of the virtual resource value is not shown in the figure) such as "virtual resource XXX.X k".

When the viewer performs the request display operation in the live streaming page at the viewer end, for example, when it is detected that the viewer performs the request display operation, the request list 20 may be displayed in the live streaming page in response to the request display operation. The request information of the interaction request in the live stream is displayed in the request list 20 based on the virtual resource information corresponding to the interaction request, and when the request information of the interaction request in the live stream is displayed, the virtual resource value included in the at least part of the request information is displayed by using the first display precision, and the virtual resource value included in the request information other than the at least part of the request information is displayed by using the second display precision, as shown in FIG. 3 (an example in which the second display precision is precise to thousands place in the figure, and a specific value of the virtual resource value is not shown in the figure, there are only part of the virtual resources which are displayed by using the second display precision are shown in the figure, such as "virtual resource XXX k" ).

In the foregoing implementation, when the current user is not a streamer of the live stream, the at least part of the request information of the virtual resource value included in the request list which is displayed by using the first display precision may be flexibly set as needed. For example, the at least part of request information may be request information sorted before the target request information, request information sorted after the target request information, first m (m is a positive integer) request information in the request list, or request information other than the first m request information in the request list, and the like.

Alternatively, the at least part of request information includes target request information of a target interaction request sent by the current user, and request information having a set position relationship with the target request information in the target sorting manner. That is, the virtual resource value included in the target request information and the virtual resource value included in the request information having the set position relationship with the target request information may be displayed by using the first display precision, and the virtual resource value included in the request information other than the target request information and the request information having the set position relationship with the target request information is displayed by using the second display precision which is lower than the first display precision.

In some embodiments, the target interaction request may be an interaction request sent by the current user in the live stream. The target request information may be the request information of the target interaction request, that is, the request information of the interaction request sent by the current user in the live stream. The virtual resource value included in the target request information may be a virtual resource value of a virtual resource sent by the current user in the live stream.

The set position relationship may be set in advance according to needs, which is not limited in this embodiment. Alternatively, the set position relationship includes arranging on a first side of the target request information; or arranging on a second side of the target request information and separated from target pre-request information by request information with quantity less than or equal to a predetermined quantity The first side is configured to arrange request information having virtual resource value less than or equal to virtual resource value comprised in the target request information; and the second side is an opposite side to the first side.

In some embodiments, the first side may be a side configured to display the request information including virtual resource values that are less than or equal to the virtual resource values included in the target request information. In other words, the virtual resource values included in the request information displayed on the first side of the target request information is less than or equal to the virtual resource value included in the target request information. The second side may be the opposite side to the first side, for example, a side configured to display the request information including virtual resource values that are greater than or equal to the virtual resource values included in the target request information. In other words, the virtual resource values included in the request information displayed on the second side of the target request information is greater than or equal to the virtual resource value included in the target request information.

In this case, the at least part of the request information including the virtual resource value which is displayed by using the first display precision may be the request information that includes the virtual resource value that is less than the virtual resource value included in the target request information, and the request information that includes the virtual resource value that is greater than the virtual resource value included in the target request information and the request information separated from the target request information by request information with quantity less than or equal to the predetermined quantity, so that the following may be displayed by using the first display precision: the virtual resource value corresponding to the current user, the virtual resource value less than the virtual resource value corresponding to the current user, and the virtual resource values greater than the virtual resource value and separated from the virtual resource value corresponding to the current user by virtual resource values with quantity less than or equal to the predetermined quantity.

It should be noted that, when there is request information including the virtual resource values that are equal to the virtual resource values included in the target request information, whether to use the first display precision to display the virtual resource values included in the request information may be determined based on whether the position relationship between the request information and the target request information meets the set position relationship.

In some implementations, the current user is a streamer of the live stream, and before displaying the request information of the plurality of interaction requests in the live stream within the request list in the target sorting manner, further includes: setting, in response to a sorting manner setting operation, a sorting manner for displaying the request information within the request list to the target sorting manner.

In some embodiments, the sorting manner setting operation may be a triggering operation for setting a sorting manner when the interaction request is displayed in the request list, for example, an operation of selecting a target sorting manner, and the like.

In the foregoing implementation, at least two sorting manners including the target sorting manner may be predetermined for the streamer to select, and when receiving the sorting manner setting operation of the current user (for example, the streamer) for the target sorting manner, the sorting manner in which the request information of the interaction request in the live stream is displayed within the request list is set to be the target sorting manner, so that when the request list is displayed, the request information of the interaction request in the live stream is displayed within the request list by using the target sorting manner.

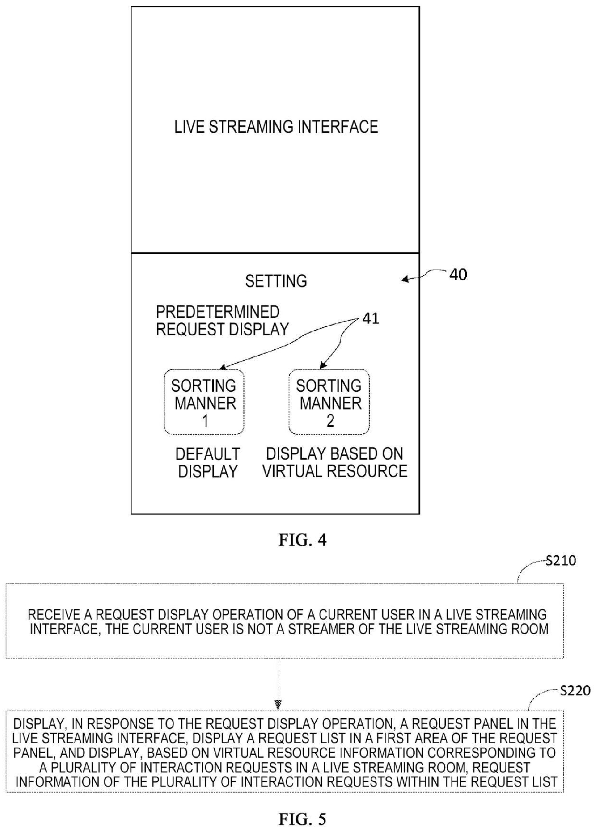

For example, when the request list 20 is displayed, a setting control 21 may be further displayed, as shown in FIG. 2. Correspondingly, when the current user wants to set the sorting manner of the request information, the current user may trigger the setting control 21 to perform the sorting manner setting operation, so that when receiving the sorting manner setting operation of the current user, a current application may display a setting panel 40, and display sorting manner information 41 of the at least two sorting manners in the setting panel 40, as shown in FIG. 4, a sorting manner 1 corresponding to a default sorting manner and a sorting manner 2 corresponding to the target sorting manner. When it is detected that the current user triggers the sorting manner information 41 of a certain sorting manner, a sorting manner in which the request information is displayed in the request list 20 may be set as the sorting manner. For example, when it is detected that the current user triggers the sorting manner information of the target sorting manner, a sorting manner in which the request information is displayed in the request list 20 may be set to the target sorting manner.

It may be understood that, after the streamer of the live stream sets the sorting manner, when the streamer is viewing the request list in the live stream, the streamer may display the request information of the interaction request in the live stream within the request list in a sorting manner set by the streamer. In this case, when the viewer is viewing the request list in the live stream, the viewer may display the request information of the interaction request in the live stream within the request list in the sorting manner set by the streamer or not. Alternatively, when the viewer is viewing the request list in the live stream, the viewer may display the request information of the interaction request in the live stream within the request list in the sorting manner set by the streamer.

In some embodiments, the request display operation may include a request sending operation, so that when the user sends the interaction request, the request list may be displayed. For example, when the request sending operation of the current user is received, the target interaction request may be sent to the streamer of the live stream, and the request list is displayed in the live streaming page for the current user to view the interaction request in the live stream. In this case, alternatively, the current user is not the streamer of the live stream, the request display operation includes a request sending operation, and displaying the request list in the live streaming page includes: sending a target interaction request to the streamer of the live stream, and displaying the request list in the live streaming page.

According to the method for displaying a request provided in this embodiment, the request display operation of the current user in the live streaming page is received; and in response to the request display operation, the request list is displayed in the live streaming page, and the request information of the plurality of interaction requests is displayed within the request list based on the virtual resource information corresponding to the plurality of interaction requests in the live stream, the live stream corresponds to the live streaming page described above. According to the embodiment with the above technical solution, the interaction request in the live stream is displayed within the request list based on the virtual resource information corresponding to the interaction request, the display mode of the interaction request in the request list can be enriched, the display flexibility of the interaction request is improved, and the efficiency of the streamer processing the interaction request can be improved and the efficiency of the viewer viewing the interaction request can be improved.

FIG. 5 is a schematic flowchart of another method for displaying a request according to an embodiment of the present disclosure. The solution in this embodiment may be combined with one or more alternative solutions in the foregoing embodiments. Alternatively, the current user is not a streamer of the live stream, and displaying the request list in the live streaming page includes: displaying a request panel in the live streaming page, and displaying the request list in a first area of the request panel, where the request panel further includes a second area and/or a third area. The second area is configured to display state information between the current user and the streamer of the live stream, and the third area is configured to display target request information of a target interaction request sent by the current user.

Correspondingly, as shown in FIG. 5, the method for displaying a request provided in this embodiment may include: S210, receive a request display operation of a current user in a live streaming page, the current user is not a streamer of the live stream. S220: display, in response to the request display operation, a request panel in the live streaming page, display a request list in a first area of the request panel, and display, based on virtual resource information corresponding to a plurality of interaction requests in a live stream, request information of the plurality of interaction requests within the request list.

In some embodiments, the live stream corresponds to the live streaming page, and the request panel further includes a second area and/or a third area. The second area is configured to display state information between the current user and the streamer of the live stream, and the third area is configured to display target request information of a target interaction request sent by the current user.

In this embodiment, the request list 20 may be displayed in the request panel. Specifically, when the request display operation of the current user is received, a request panel 30 may be displayed in the live streaming page, and the request list 20 is displayed in a first area 31 of the request panel 30, as shown in FIG. 3.

In some embodiments, the request panel may be a panel for displaying the request list. For example, when the current user is a streamer of a live stream, the request panel may be a management panel. When the current user is not a streamer of a live stream, the request panel may be an application panel for a user to send an interaction request.

As shown in FIG. 3, when the current user is not the streamer of the live stream, the request panel 30 may further include a second area 32 and/or a third area 33. The second area 32 may be configured to display state information between the current user and the streamer of the live stream, and the third area 33 may be configured to display the request information of the target interaction request sent by the current user. Here, the state information between the current user and the streamer of the live stream may be information for describing a state corresponding to the interaction request between the current user and the streamer of the live stream. For example, when the interaction request is a connection request, the state information may be information for describing the connection state between the current user and the streamer, and the connection state information may be, for example, being connected or already connected.

Therefore, in response to the request display operation displaying the request panel, the request list may be displayed in the first area of the request panel, and the request information of the interaction request in the live stream is displayed within the request list based on the virtual resource information corresponding to the interaction request; and the state information between the current user and the streamer is displayed in the second area of the request panel, and the request information of the target interaction request sent by the current user is displayed in the third area of the request panel.

In addition, as shown in FIG. 3, when the request information is displayed in the request panel, sorting information, such as a sorting number, of the request information in the request list may also be further displayed, so that the current user clearly understands a sorting order of the displayed request information in the request list. The request panel may also display a cancel request control for the current user to cancel the target interaction request that has been sent by triggering the cancel request control, for example, cancel applying for the connection with the streamer through the target interaction request.

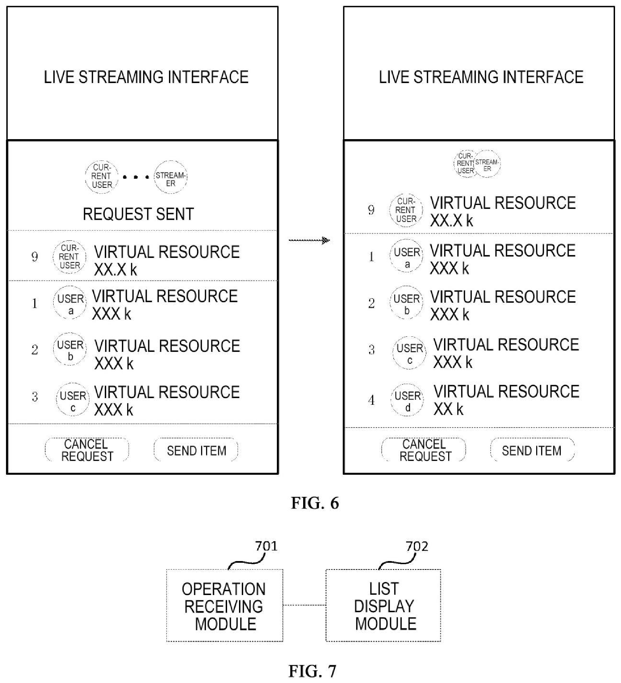

In some embodiments, the state information may have an expanded state and a retracted state. When in the expanded state, the state information may be displayed as a larger size and/or display more content, and occupy a larger display area in the request panel. When in the retracted state, the state information may be displayed as a smaller size and/or display less content, and occupy a smaller display area in the request panel. The size of the second area when the state information is in the expanded state may be greater than the size of the second area when the state information is in the retracted state. Therefore, when the state information is in the expanded state, the state information may be switched to the retracted state based on the corresponding triggering operation (for example, the first triggering operation) of the current user, the size of the second area is reduced, and the size of the first area is increased based on the reduced size of the second area, as shown in FIG. 6, to present more request information in the first area to the current user.

In this case, alternatively, after displaying the request panel in the live streaming page, further includes: switching, in response to a first triggering operation applied within the request panel, the state information from an expanded state to a retracted state, reducing a size of the second area, and increasing a size of the first area based on the reduced size of the second area.

In some embodiments, the first triggering operation may be a triggering operation to indicate that the state information is switched from the expanded state to the retracted state. The execution mode of the first triggering operation is not limited, and for example, the first triggering operation may be a sliding operation applied within the request panel, for example, an up-sliding operation.

In some implementations, after displaying the request panel in the live streaming page, further includes: displaying a virtual item panel in response to a second triggering operation applied within the request panel, the virtual item panel displaying item information of at least one virtual item; updating, in response to an item sending operation applied within the virtual item panel and based on a virtual item corresponding to the item sending operation, the target request information and/or an arrangement order of the target request information in the request information of the plurality of interaction requests.

In some embodiments, the second triggering operation may be a triggering operation to indicate displaying the virtual item panel, for example, an operation of triggering a certain control in the request panel, or an operation of performing a predetermined gesture in the request panel, or the like, the predetermined gesture may be a gesture determined in advanced, for example, the predetermined gesture may be a gesture for drawing circles. For example, the second triggering operation may be an operation to trigger an item sending control in the request panel. The virtual item may be a virtual item in the live stream, such as a virtual gift or the like, and may be sent by the user.

In the foregoing implementation, the current user may be further supported to quickly open the virtual item panel by performing the second triggering operation in the request panel, to send the virtual item in the live stream. For example, the virtual item is sent to the streamer of the live stream, and the operation required for the user to send the virtual item after sending the interaction request is reduced.

For example, when the second triggering operation applied within the request panel 30 is received, for example, when it is detected that the current user triggers an item sending control 34 (as shown in FIG. 3) displayed within the request panel 30, the virtual item panel may be displayed. The item information of at least one virtual item is displayed in the virtual item panel, and the request panel 30 may be canceled to display. When the item sending operation applied within the virtual item panel is received, for example, when a sending control corresponding to the item information of a virtual item displayed in the virtual item panel is detected, the virtual item corresponding to the item sending operation may be sent. Based on the virtual item, the target request information of the target interaction request sent by the current user and/or the sorting order of the request information of the plurality of request interaction requests displayed within the request list by the target request information is updated, and may further be switched back to the request panel 30. The updated target request information is displayed in the request panel 30 and/or the request information of the plurality of interaction requests in the live stream is displayed within the request list by using the updated sorting order.

Taking the virtual item information including the virtual resource value as an example, when the target request information of the target interaction request sent by the current user is updated based on the virtual item that has been sent, for example, a total value of the virtual resource corresponding to the virtual item sent this time may be calculated based on the quantity of the virtual items sent this time and the value of the virtual resource corresponding to a single virtual item, and the virtual resource value included in the target request information is increased by the total value to obtain the updated virtual resource value of the current user, thereby obtaining the updated target request information.

After the updated virtual resource value of the current user is obtained, it may be determined whether the sorting order of the target request information in the request list needs to be updated based on the updated virtual resource value. For example, if the updated virtual resource value is greater than the virtual resource value located on the second side of the updated virtual resource value and adjacent to the updated virtual resource value, the sorting order of the target request information in the request list may be updated; otherwise, the sorting order of the target request information in the request list may not be updated.

It may be understood that, when the virtual resource value corresponding to the interaction request sent by other users other than the current user in the live stream changes, based on the changed virtual resource information, the request information of the interaction request sent by the users may be updated and/or the request information of the interaction request sent by the user is sorted in the request list. Whether the request information of the interaction request sent by a user in the live stream is visible to a user other than the streamer and the user may be set by the user.

According to the method for displaying a request provided in this embodiment, the request list is displayed in the first area of the request panel, and the request information of the interaction request in the live stream is displayed within the request list based on the virtual resource information corresponding to the interaction request; and the state information between the current user and the streamer is displayed in the second area of the request panel, and the request information of the target interaction request sent by the current user is displayed in the third area of the request panel. The display mode of the request information can be further enriched, and convenience is provided for the user to view the state information between the user and the streamer, the request information of the interaction request sent by the user, and the request list.

FIG. 7 is a structural block diagram of an apparatus for displaying a request according to an embodiment of the present disclosure. The apparatus may be implemented by software and/or hardware, and may be configured in an electronic device, and is typically configured in a mobile phone or a tablet computer, and the apparatus may display a request list of a live stream in a live streaming page by performing a method for displaying a request, for example, display a request list of a connection request in a live stream in a live streaming page. As shown in FIG. 7, the apparatus for displaying a request provided in this embodiment may include an operation receiving module 701 and a list display module 702. In some embodiments, the operation receiving module 701 is configured to receive a request display operation of a current user in a live streaming page; and the list display module 702 is configured to display, in response to the request display operation, a request list in the live streaming page, and display, based on virtual resource information corresponding to a plurality of interaction requests in a live stream, request information of the plurality of interaction requests within the request list, the live stream corresponding to the live streaming page.

According to the apparatus for displaying a request provided in this embodiment, the request display operation of the current user in the live streaming page is received through the operation receiving module; the request list is displayed in the live streaming page in response to the request display operation through the list display module, and the request information of the plurality of interaction requests is displayed within the request list based on the virtual resource information corresponding to the plurality of interaction requests in the live stream, and the live stream corresponds to the live streaming page. According to the embodiment with the above technical solution, the interaction request in the live stream is displayed within the request list based on the virtual resource information corresponding to the interaction request, the display mode of the interaction request in the request list can be enriched, the display flexibility of the interaction request is improved, and the efficiency of the streamer processing the interaction request can be improved and he efficiency of the viewer viewing the interaction request can be improved.

In the foregoing solution, the virtual resource information may include a virtual resource value, and the list display module 702 may be configured to: display the request information of the plurality of interaction requests in the live stream within the request list in a target sorting manner, where the request information of the plurality of interaction requests is sorted in the target sorting manner based on a size relationship of virtual resource values corresponding to the plurality of interaction requests.

In the foregoing solution, the current user may be a streamer of the live stream, and the apparatus for displaying a request provided in this embodiment may further include: a sorting setting module, configured to set, before displaying the request information of the plurality of interaction requests in the live stream within the request list in the target sorting manner, in response to a sorting manner setting operation, a sorting manner for displaying the request information within the request list to the target sorting manner.

In the foregoing solution, the current user may not be a streamer of the live stream, the request display operation may include a request sending operation, and the list display module 702 may be configured to: send a target interaction request to the streamer of the live stream, and display the request list in the live streaming page.

In the foregoing solution, the current user may not be a streamer of the live stream, and the list display module 702 may be configured to: display a request panel in the live streaming page, and display the request list in a first area of the request panel, where the request panel further includes a second area and/or a third area. The second area is configured to display state information between the current user and the streamer of the live stream, and the third area is configured to display target request information of a target interaction request sent by the current user.

Further, the apparatus for displaying a request provided in this embodiment may further include: a state switching module configured to switch, after displaying the request panel in the live streaming page, in response to a first triggering operation applied within the request panel, the state information from an expanded state to a retracted state, reduce a size of the second area, and increase a size of the first area based on the reduced size of the second area.

Further, the apparatus for displaying a request provided in this embodiment may further include: a panel display module configured to display, after displaying the request panel in the live streaming page, a virtual item panel in response to a second triggering operation applied within the request panel. The virtual item panel displays item information of at least one virtual item. An information updating module configured to update, in response to an item sending operation applied within the virtual item panel and based on a virtual item corresponding to the item sending operation, the target request information and/or an arrangement order of the target request information in the request information of the plurality of interaction requests.

In the foregoing solution, the virtual resource information may be information of a virtual resource sent by a sending user of the interaction request in the live stream. The request information may include a virtual resource value in the virtual resource information. The virtual resource values displayed within the request list may have the same or different display precision.

In the foregoing solution, the list display module 702 may be further configured to perform at least one of: displaying, in accordance with a determination that the current user is a streamer of the live stream, a virtual resource value in the request information within the request list by using a first display precision; displaying, in accordance with a determination that the current user is not a streamer of the live stream, a virtual resource value in at least part of request information by using a first display precision, and displaying a virtual resource value in request information within the request list other than the at least part of request information by using a second display precision, the first display precision being higher than the second display precision.

In the foregoing solution, the at least part of request information may include target request information of a target interaction request sent by the current user, and request information having a set position relationship with the target request information in the target sorting manner.

In the foregoing solution, the set position relationship may include arranging on a first side of the target request information; or arranging on a second side of the target request information and separated from target pre-request information by request information with quantity less than or equal to a predetermined quantity. The first side is configured to arrange request information having virtual resource value less than or equal to virtual resource value comprised in the target request information, and the second side is an opposite side to the first side.

The apparatus for displaying a request provided in the embodiments of the present disclosure may perform the method for displaying a request provided by any embodiment of the present disclosure, and has corresponding function modules and beneficial effects of the method for displaying a request. For technical details not described in detail in this embodiment, reference may be made to the method for displaying a request provided by any embodiment of the present disclosure.

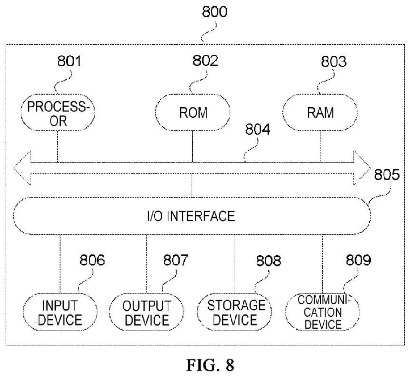

Referring to FIG. 8, FIG. 8 is a schematic structural diagram of an electronic device (for example, a terminal device) 800 suitable for implementing embodiments of the present disclosure. The terminal device in the embodiments of the present disclosure may include, but is not limited to, a mobile terminal such as a mobile phone, a notebook computer, a digital broadcast receiver, a PDA (personal digital assistant), a PAD (tablet computer), a PMP (portable multimedia player), a vehicle-mounted terminal (for example, a vehicle-mounted navigation terminal), and a fixed terminal such as a digital TV, a desktop computer, or the like. The electronic device shown in FIG. 8 is merely an example, and should not cause any limitation on the functions and usage scope of the embodiments of the present disclosure.

As shown in FIG. 8, the electronic device 800 may include a processing device (for example, a central processor, a graphics processor, etc.) 801, which may perform various appropriate acts and processing according to a program stored in a read-only memory (ROM) 802 or a program loaded into a random access memory (RAM) 803 from a storage device 808. In the RAM 803, various programs and data required by the operation of the electronic device 800 are also stored. The processing device 801, the ROM 802, and the RAM 803 are connected to each other through a bus 804. Input/output (I/O) page 805 is also connected to the bus 804.

Generally, the following devices may be connected to the I/O page 805: an input device 806 including, for example, a touch screen, a touchpad, a keyboard, a mouse, a camera, a microphone, an accelerometer, a gyroscope, etc.; an output device 807 including, for example, a liquid crystal display (LCD), a speaker, a vibrator, etc.; a storage device 808 including, for example, a magnetic tape, a hard disk, etc.; and a communication device 809. The communication device 809 may allow the electronic device 800 to communicate wirelessly or wired with other devices to exchange data. While FIG. 8 illustrates the electronic device 800 with various devices, it should be understood that it is not required to implement or have all illustrated devices. More or fewer devices may alternatively be implemented or provided.

In particular, according to embodiments of the present disclosure, the process described above with reference to the flowchart may be implemented as a computer software program. For example, the embodiments of the present disclosure include a computer program product comprising a computer program embodied on a non-transitory computer readable medium, where the computer program comprises program code for performing the method shown in the flowchart. In such embodiments, the computer program may be downloaded and installed from the network through the communication device 809, or installed from the storage device 808, or installed from the ROM 802. When the computer program is executed by the processing device 801, the foregoing functions defined in the method of the embodiments of the present disclosure are performed.

It should be noted that the computer readable medium of the present disclosure described above may be a computer readable signal medium, a computer readable storage medium, or any combination of the foregoing two. The computer readable storage medium may be, for example, but not limited to, an electronic, magnetic, optical, electromagnetic, infrared, or semiconductor system, apparatus, or means, or any combination thereof. More specific examples of computer readable storage media may include, but are not limited to, an electrical connection with one or more wires, a portable computer diskette, a hard disk, a random access memory (RAM), a read-only memory (ROM), an erasable programmable read-only memory (EPROM or flash memory), an optical fiber, a portable compact disk read-only memory (CD-ROM), an optical storage means, a magnetic storage means, or any suitable combination of the foregoing. In the present disclosure, a computer readable storage medium may be any tangible medium containing or storing a program that may be used by an instruction execution system, apparatus, or means or may be used in conjunction with an instruction execution system, apparatus, or means. In the present disclosure, a computer readable signal medium may include a data signal propagated in baseband or propagated as part of a carrier, where the computer readable program code is carried. Such a propagated data signal may take a variety of forms including, but not limited to, an electromagnetic signal, an optical signal, or any suitable combination of the foregoing. The computer readable signal medium may also be any computer readable medium other than a computer readable storage medium that may send, propagate, or transmit a program used by an instruction execution system, apparatus, or means or in conjunction with an instruction execution system, apparatus, or means. The program code embodied on the computer readable medium may be transmitted with any suitable medium, including, but not limited to: a wire, an optical cable, RF (radio frequency), and the like, or any suitable combination of the foregoing.

In some implementations, a client and a server may communicate using any currently known or future developed network protocol, such as HTTP (HyperText Transfer Protocol), and may be interconnected with any form or medium of digital data communication (e.g., communication network). Examples of communication networks include local area networks (LANs), wide area networks (WANs), internets (e.g., the Internet), and peer-to-peer networks (e.g., ad hoc peer-to-peer networks), as well as any currently known or future developed networks.

The computer-readable medium described above may be included in the electronic device; or may be separately present without being assembled into the electronic device.

The computer readable medium carries one or more programs, and the one or more programs when executed by the electronic device, causes the electronic device to: receive a request display operation of a current user in a live streaming page; display, in response to the request display operation, a request list in the live streaming page, and display, based on virtual resource information corresponding to a plurality of interaction requests in a live stream, request information of the plurality of interaction requests within the request list, the live stream corresponding to the live streaming page.

Computer program code for performing the operations of the present disclosure may be written in one or more programming languages or combinations of the programming languages, where the programming languages include, but not limited to, object oriented programming languages such as Java, Smalltalk, C + +, and conventional procedural programming languages, such as the "C" language or similar programming languages. The program code may execute entirely on a user computer, partially on a user computer, as a stand-alone software package, partially on a user computer and partially on a remote computer, or entirely on a remote computer or server. In the case of a remote computer, the remote computer may be connected to the user computer through any kind of network, including a local area network (LAN) or a wide area network (WAN), or the remote computer may be connected to an external computer (e.g., connected through the Internet with an Internet service provider).

The flowcharts and block diagrams in the figures illustrate architectures, functions, and operations of possible implementations of systems, methods, and computer program products according to various embodiments of the present disclosure. In this regard, each block in the flowcharts or block diagrams may represent a module, program segment, or portion of code that includes one or more executable instructions for implementing the specified logical function. It should also be noted that in some alternative implementations, the functions noted in the blocks may also occur in a different order than the order illustrated in the figures. For example, two consecutively represented blocks may actually be performed substantially in parallel, which may sometimes be performed in a reverse order, depending on the function involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. In some embodiments, the name of the module does not constitute a limitation on the unit itself in certain cases.

The functions described above may be performed, at least in part, by one or more hardware logic components. For example, without limitation, example types of the hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program used by an instruction execution system, apparatus, or device or used in conjunction with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination of the foregoing. More specific examples of machine-readable storage media may include an electrical connection based on one or more lines, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage devices, a magnetic storage devices, or any suitable combination of the foregoing.

According to one or more embodiments of the present disclosure, Example 1 provides a method for displaying a request, including: receiving a request display operation of a current user in a live streaming page; and displaying, in response to the request display operation, a request list in the live streaming page, and displaying, based on virtual resource information corresponding to a plurality of interaction requests in a live stream, request information of the plurality of interaction requests within the request list . The live stream corresponds to the live streaming page.

According to one or more embodiments of the present disclosure, Example 2 according to the method of Example 1, the virtual resource information comprises a virtual resource value, and displaying, based on virtual resource information corresponding to a plurality of interaction requests in a live stream, request information of the plurality of interaction requests within the request list comprises: displaying the request information of the plurality of interaction requests in the live stream within the request list in a target sorting manner, where the request information of the plurality of interaction requests is sorted in the target sorting manner based on a size relationship of virtual resource values corresponding to the plurality of interaction requests.

According to one or more embodiments of the present disclosure, Example 3 according to the method of Example 1, wherein the current user is a streamer of the live stream, and before displaying the request information of the plurality of interaction requests in the live stream within the request list in the target sorting manner, the method further includes: setting, in response to a sorting manner setting operation, a sorting manner for displaying the request information within the request list to the target sorting manner.

According to one or more embodiments of the present disclosure, Example 4 according to the method of Example 1, wherein the current user is not a streamer of the live stream, the request display operation comprises a request sending operation, and displaying the request list in the live streaming page includes: sending a target interaction request to the streamer of the live stream, and displaying the request list in the live streaming page.

According to one or more embodiments of the present disclosure, Example 5 according to the method of Example 1, wherein the current user is not a streamer of the live stream, and displaying the request list in the live streaming page includes: displaying a request panel in the live streaming page, and displaying the request list in a first area of the request panel, where the request panel further includes a second area and/or a third area. The second area is configured to display state information between the current user and the streamer of the live stream, and the third area is configured to display target request information of a target interaction request sent by the current user.

According to one or more embodiments of the present disclosure, Example 6 according to the method of Example 5, after displaying the request panel in the live streaming page, the method further includes: switching, in response to a first triggering operation applied within the request panel, the state information from an expanded state to a retracted state, reducing a size of the second area, and increasing a size of the first area based on the reduced size of the second area.

According to one or more embodiments of the present disclosure, Example 7 according to the method of Example 5, after displaying the request panel in the live streaming page, the method further includes: displaying a virtual item panel in response to a second triggering operation applied within the request panel, the virtual item panel displaying item information of at least one virtual item; updating, in response to an item sending operation applied within the virtual item panel and based on a virtual item corresponding to the item sending operation, the target request information and/or an arrangement order of the target request information in the request information of the plurality of interaction request.

According to one or more embodiments of the present disclosure, Example 7 according to any of the method of Examples 1 to 5, wherein the virtual resource information is information of a virtual resource sent by a sending user of the interaction request in the live stream. The request information includes a virtual resource value in the virtual resource information. The virtual resource values displayed within the request list have the same or different display precisions.

According to one or more embodiments of the present disclosure, Example 9 according to the method of Example 8, wherein displaying, based on the virtual resource information corresponding to the plurality of interaction requests in the live stream, the request information of the plurality of interaction requests within the request list comprises at least one of: in accordance with a determination that the current user is a streamer of the live stream, displaying a virtual resource value in the request information within the request list by using a first display precision; in accordance with a determination that the current user is not a streamer of the live stream, displaying a virtual resource value in at least part of the request information by using a first display precision, and displaying a virtual resource value in the request information within the request list other than the at least part of request information by using a second display precision. The first display precision is higher than the second display precision.

According to one or more embodiments of the present disclosure, Example 10 according to the method of Example 9, wherein the at least part of request information comprises target request information of a target interaction request sent by the current user, and request information having a set position relationship with the target request information in the target sorting manner.

According to one or more embodiments of the present disclosure, Example 11 according to the method of Example 10, the set position relationship includes arranging on a first side the target request information; or arranging on a second side of the target request information and separated from target pre-request information by request information with quantity less than or equal to a predetermined quantity. The first side is configured to arrange request information having virtual resource value less than or equal to virtual resource value included in the target request information. The second side is an opposite side to the first side.

According to one or more embodiments of the present disclosure, Example 12 provides an apparatus for displaying a request, including: an operation receiving module configured to receive a request display operation of a current user in a live streaming page; and a list display module configured to display , in response to the request display operation, a request list in the live streaming page, and display, based on virtual resource information corresponding to a plurality of interaction requests in a live stream, request information of the plurality of interaction requests within the request list, the live stream corresponding to the live streaming page.

According to one or more embodiments of the present disclosure, Example 13 provides an electronic device, including: one or more processors; a memory, configured to store one or more programs, where the one or more programs, when executed by the one or more processors, cause the one or more processors to implement the method for displaying a request of any of Examples 1 to 11.

According to one or more embodiments of the present disclosure, Example 14 provides a computer-readable storage medium having a computer program stored thereon, where the program, when executed by a processor, implements the method for displaying a request of any of Examples 1 to 11.

According to one or more embodiments of the present disclosure, Example 15 provides a computer program product, where the computer program product, when executed by a computer, causes the computer to implement the method for displaying a request of any of Examples 1 to 11.

According to a method, apparatus, electronic device, storage medium and program product for displaying a request provided by the embodiments of the present disclosure, a request display operation of a current user in a live streaming page is received. In response to the request display operation, a request list is displayed in the live streaming page, and request information of the plurality of interaction requests is displayed within the request list based on the virtual resource information corresponding to the plurality of interaction requests in the live stream, the live stream corresponds to the live streaming page described above. According to the embodiments of the present disclosure with the above technical solution , the interaction request in the live stream is displayed within the request list based on the virtual resource information corresponding to the interaction request, the display mode of the interaction request in the request list can be enriched, the display flexibility of the interaction request is improved, and the efficiency of the streamer processing the interaction request can be improved and the efficiency of the viewer viewing the interaction request can be improved.

The above description is merely an illustration of preferred embodiments of the present disclosure and the principles of the applied technology. It should be understood by those skilled in the art that the disclosure scope in the present disclosure is not limited to a technical solution of a specific combination of the above technical features, and should also cover other technical solutions formed by any combination of the above technical features or their equivalent features without departing from the above disclosed concept. For example, a technical solution formed by mutually replacing the above features with the technical features with similar functions disclosed in the present disclosure (but not limited to).

Further, while operations are depicted in a particular order, this should not be understood to require that these operations are performed in the particular order shown or in a sequential order. In certain circumstances, multitasking and parallel processing may be advantageous. Likewise, while several specific implementation details are included in the discussion above, these should not be construed as limiting the scope of the present disclosure. Certain features described in the context of individual embodiments may also be implemented in combination in a single embodiment. Conversely, the various features described in the context of a single embodiment may also be implemented in a plurality of embodiments either individually or in any suitable subcombination.

Although the present subject matter has been described in a language specific to structural features and/or methodological acts, it is to be understood that the subject matter defined in the appended claims is not necessarily limited to the specific features or acts described above. Rather, the specific features and acts described above are merely an example form of implementing the claims.

## Claims

1. A method for displaying a request, comprising:
receiving a request display operation of a current user in a live streaming page;
displaying, in response to the request display operation, a request list in the live streaming page, and displaying, based on virtual resource information corresponding to a plurality of interaction requests in a live stream, request information of the plurality of interaction requests within the request list, the live stream corresponding to the live streaming page.

2. The method of claim 1, wherein the virtual resource information comprises a virtual resource value, and displaying, based on the virtual resource information corresponding to the plurality of interaction requests in the live stream, the request information of the plurality of interaction requests within the request list comprises:
displaying the request information of the plurality of interaction requests in the live stream within the request list in a target sorting manner, wherein the request information of the plurality of interaction requests is sorted in the target sorting manner based on a size relationship of virtual resource values corresponding to the plurality of interaction requests.

3. The method of claim 2, wherein the current user is a streamer of the live stream, and before displaying the request information of the plurality of interaction requests in the live stream within the request list in the target sorting manner, the method further comprises:
setting, in response to a sorting manner setting operation, a sorting manner for displaying the request information within the request list to the target sorting manner.

4. The method of claim 1, wherein the current user is not a streamer of the live stream, the request display operation comprises a request sending operation, and displaying the request list in the live streaming page comprises:
sending a target interaction request to the streamer of the live stream, and displaying the request list in the live streaming page.

5. The method of claim 1, wherein the current user is not a streamer of the live stream, and displaying the request list in the live streaming page comprises:
displaying a request panel in the live streaming page, and displaying the request list in a first area of the request panel, wherein the request panel further comprises a second area for displaying state information between the current user and the streamer of the live stream, and/or a third area for displaying target request information of a target interaction request sent by the current user.

6. The method of claim 5, wherein after displaying the request panel in the live streaming page, the method further comprises:
switching, in response to a first triggering operation applied within the request panel, the state information from an expanded state to a retracted state, reducing a size of the second area, and increasing a size of the first area based on the reduced size of the second area.

7. The method of claim 5, wherein after displaying the request panel in the live streaming page, the method further comprises:
displaying a virtual item panel in response to a second triggering operation applied within the request panel, the virtual item panel displaying item information of at least one virtual item;
updating, in response to an item sending operation applied within the virtual item panel and based on a virtual item corresponding to the item sending operation, the target request information and/or an arrangement order of the target request information in the request information of the plurality of interaction requests.

8. The method of any of claims 1 to 7, wherein the virtual resource information is information of a virtual resource sent by a sending user of the interaction request in the live stream, the request information comprises a virtual resource value in the virtual resource information, and the virtual resource values displayed within the request list have the same or different display precision.

9. The method of claim 8, wherein displaying, based on the virtual resource information corresponding to the plurality of interaction requests in the live stream, the request information of the plurality of interaction requests within the request list comprises at least one of:
displaying, in accordance with a determination that the current user is a streamer of the live stream, a virtual resource value in the request information within the request list by using a first display precision;
displaying, in accordance with a determination that the current user is not a streamer of the live stream, a virtual resource value in at least part of request information by using a first display precision, and displaying a virtual resource value in request information within the request list other than the at least part of request information by using a second display precision, the first display precision being higher than the second display precision.

10. The method of claim 9, wherein the at least part of request information comprises target request information of a target interaction request sent by the current user, and request information having a set position relationship with the target request information in the target sorting manner.

11. The method of claim 10, wherein the set position relationship comprises arranging on a first side of the target request information; or arranging on a second side of the target request information and separated from target pre-request information by request information with quantity less than or equal to a predetermined quantity, the first side is configured to arrange request information having virtual resource value less than or equal to virtual resource value comprised in the target request information, and the second side is an opposite side to the first side.

12. An apparatus for displaying a request, comprising:
an operation receiving module configured to receive a request display operation of a current user in a live streaming page;
a list display module configured to display, in response to the request display operation, a request list in the live streaming page, and display, based on virtual resource information corresponding to a plurality of interaction requests in a live stream, request information of the plurality of interaction requests within the request list, the live stream corresponding to the live streaming page.

13. An electronic device, comprising:
at least one processor; and
a memory communicatively connected to the at least one processor; wherein
the memory stores a computer program executable by the at least one processor, and the computer program is executed by the at least one processor to cause the at least one processor to perform the method for displaying a request of any of claims 1 to 11.

14. A computer-readable storage medium storing computer instructions that, when executed by a processor, implement the method for displaying a request of any of claims 1 to 11.

15. A computer program product comprising a computer program that, when executed by a processor, implements the method for displaying a request of any of claims 1 to 11.
